Europäisches Patentamt

European Patent Office

Office européen des brevets

(11) Publication number: **0 397 503**
**A1**

## (12) EUROPEAN PATENT APPLICATION

(21) Application number: **90305064.9**

(22) Date of filing: **10.05.90**

(51) Int. Cl.⁵: **F16G 13/06**

(30) Priority: **10.05.89 NZ 229070**

(43) Date of publication of application:
**14.11.90 Bulletin 90/46**

(84) Designated Contracting States:
**AT BE CH DE DK ES FR GB GR IT LI LU NL SE**

(71) Applicant: **BRUCE HENLEY INDUSTRIES NEW ZEALAND LIMITED**
**99 Leet Street**
**Invercargill(NZ)**

(72) Inventor: **Henley, Bruce Hyndman**
**Kennington No. 1 Rd.**
**Invercargill(NZ)**

(74) Representative: **Butler, Michael John et al**
**FRANK B. DEHN & CO. Imperial House 15-19 Kingsway**
**London, WC2B 6UZ(GB)**

(54) **A chain assembly.**

(57) A chain comprises alternating pairs of inner side bars (4) and outer side bars (5,20). The inner side bars (4) are provided with barrel portions (6) secured thereto. The outer side bars (5,20) have cylindrical studs (8,21,22) which rotatably engage with bores (7) through the barrel portions (6) of the inner side bars (4). The chain is suitable for use in high load applications and the links may be formed of a plastics composite material.

Fig. 2

Fig. 11

EP 0 397 503 A1

Xerox Copy Centre

## A CHAIN ASSEMBLY

The present invention relates to a chain assembly. More particularly, but not exclusively, the present invention relates to a chain formed of plastics material suitable for use in high load, corrosive or hygienic environments.

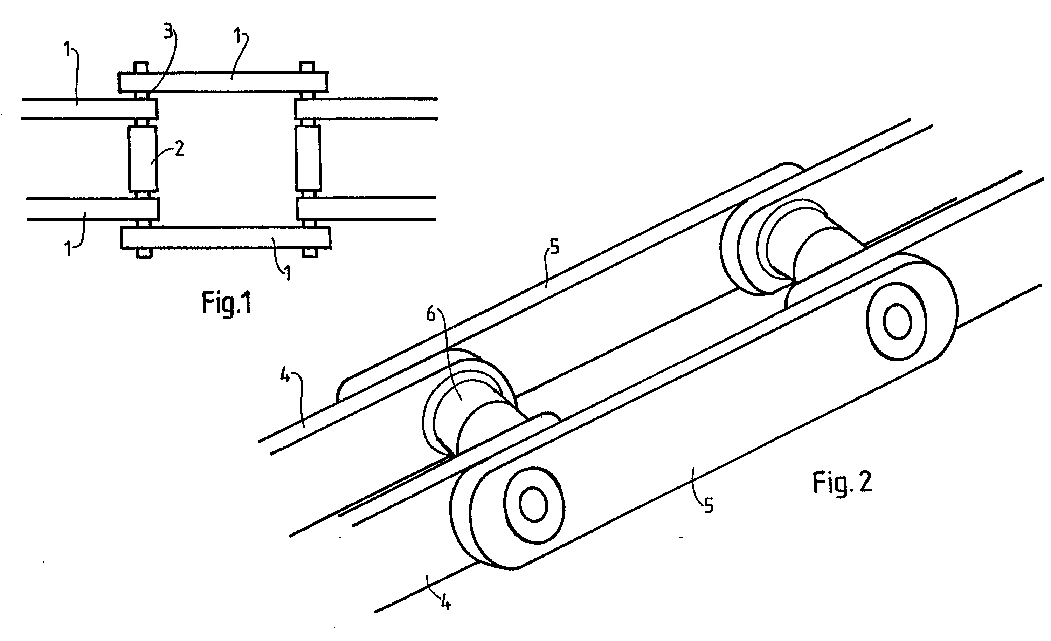

To the present time various types of chain have been commercially available. The majority of chains to date have been formed of metal and their constructions have been unsuitable for the use of plastic material. A typical prior art chain is shown in Figure 1, which is a plan view, which includes side bars 1, barrels 2 and pins 3 interconnected in the normal way. It will be seen that barrels 2 are separate components not secured to side bars 1 and that force is transmitted from barrels 2 through pin 3 to side bars 1. Such a configuration is unsuitable for plastics material as the apertures in side bars 1 would be enlarged by the force exerted thereon by pins 3 resulting in looseness in the chain. The main problem with this configuration being that the force is not transmitted directly from barrel 2 to side bar 1, but through pin 3.

Chains formed of metal also suffer the disadvantages that they corrode and may not be suitable where hygiene is important; such as in food processing. Plastics materials may be selected which are not susceptible to corrosion and are suitable for food processing applications. Plastics materials also have the advantage that they may be self-lubricating.

To the present time there have been numerous attempts at providing chains formed of plastics or composite materials suitable for use in corrosive or hygienic environments.

PCT application number PCT/F184/00073 (International publication number WO85/01783) discloses a chain wherein each link is a single integral member. The side bars of each link are provided with studs which engage with an aperture in the barrel portion of an adjacent link. Due to the flexibility required to enable the side bars to bend a sufficient amount to enable the studs to engage with the aperture in the barrel portion of an adjacent link the links can only be formed of relatively flexible materials. Accordingly, the chain is only suitable for relatively low load applications.

GB2003248 discloses a non-metallic chain assembly suitable for use in high load applications. As with WO85/01783 the barrel portion and side bars are formed as an integral unit. However, the side bars are not provided with studs as in WO85/01783 and so the side bars and barrel portions of adjacent links are interconnected by pins which carry the shear stress at the point of interconnection.

US 4,355,502 also discloses a link comprising side bars having barrel portions formed integrally therewith. Links having barrel portions formed integrally therewith are connected together by conventional links and pins in the normal way. This exposes the pins and the apertures of the conventional links to considerable shear forces.

According to one aspect of the invention there is provided a chain comprising alternating pairs of inner side bars and outer side bars, said inner side bars being provided at either end thereof with barrel portions having bores therethrough, said outer side bars being provided with studs at either end thereof adapted to rotatably engage with the bores in the barrel portions of the inner side bars.

According to a preferred embodiment of the present invention the barrel portions and studs are integrally formed with the side bars and are secured together by a pin passing through bores in the studs of the outer side bars. Preferably, the chain will be formed of a plastics or a composite material.

Specific embodiments of the invention will now be described by way of example only, with reference to the accompanying drawings, wherein:

Figure 2 shows a perspective view of the chain assembly;

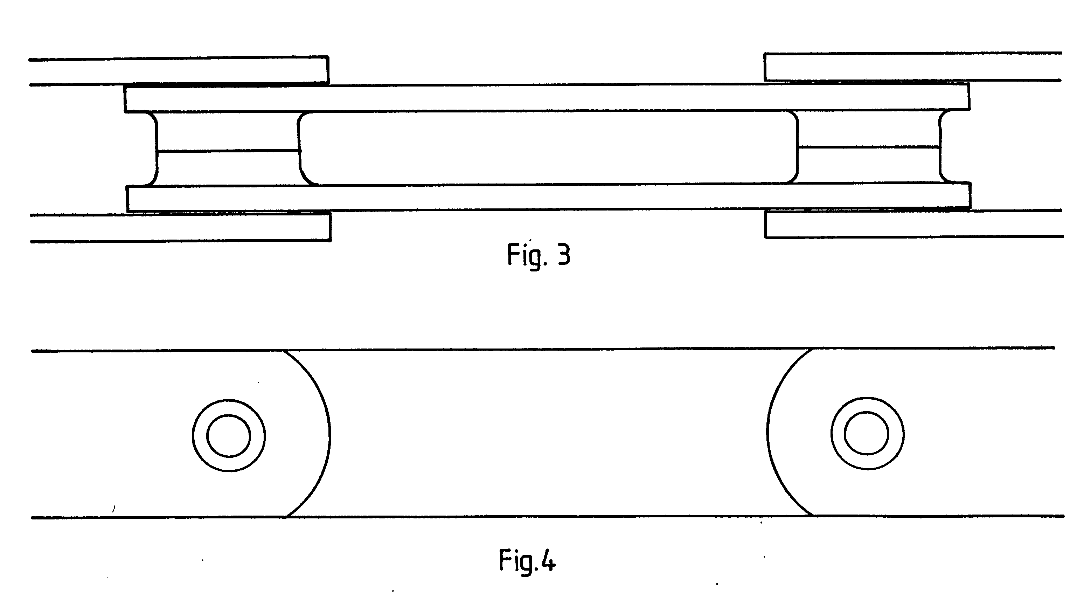

Figure 3 shows a plan view of the chain assembly;

Figure 4 shows a side view of the chain assembly;

Figure 5 shows a plan view of an inner side bar;

Figure 6 shows a side view of an inner side bar;

Figure 7 shows a plan view of a bush;

Figure 8 shows a side view of a bush;

Figure 9 shows a side view of a pin;

Figure 10 shows an end view of a pin;

Figure 11 shows a plan view of an outer side bar;

Figure 12 shows a side view of an outer side bar;

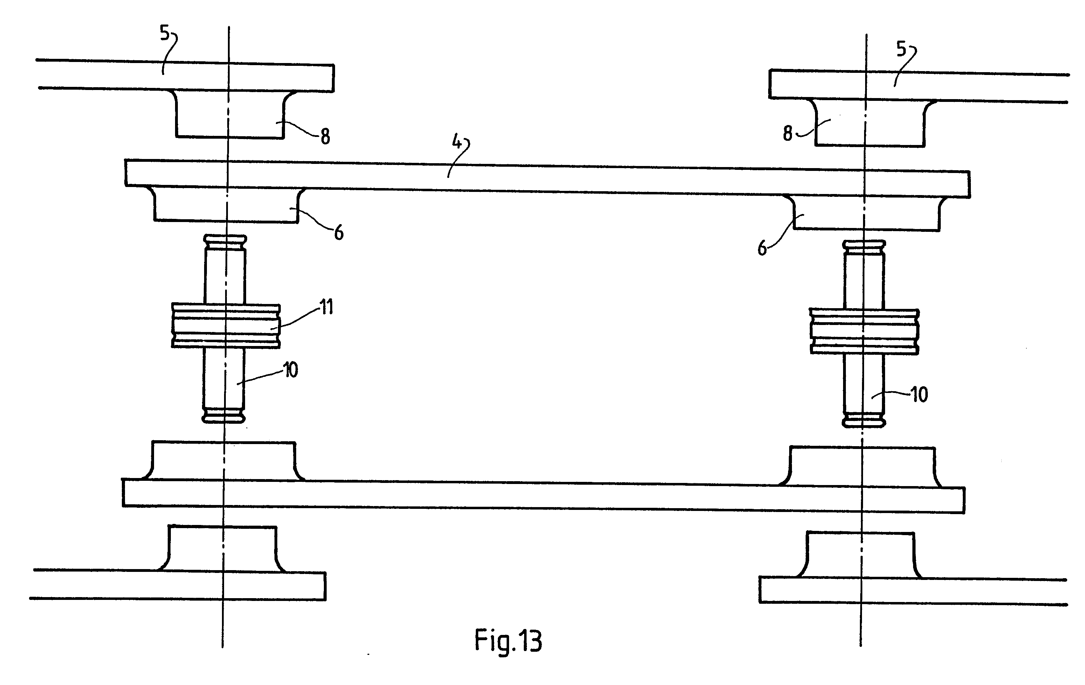

Figure 13 shows an exploded view of the chain assembly in plan;

Figure 14 shows the internal configuration of the chain assembly;

Figure 15 shows the preferred form of outer side bar;

Figure 16 shows the preferred form of outer side bar in partial cross section;

Figure 17 shows a side view of the preferred form of outer side bar;

Figure 18 shows the preferred pin assembly;

Figure 19 shows the first pin portion of the preferred pin; and

Figure 20 shows the second pin portion of the preferred pin.

The present invention relates to a chain construction which is particularly suitable for high load chains to be formed of plastics or composite materials. However, it is to be appreciated that chains according to the invention may be formed of many other materials.

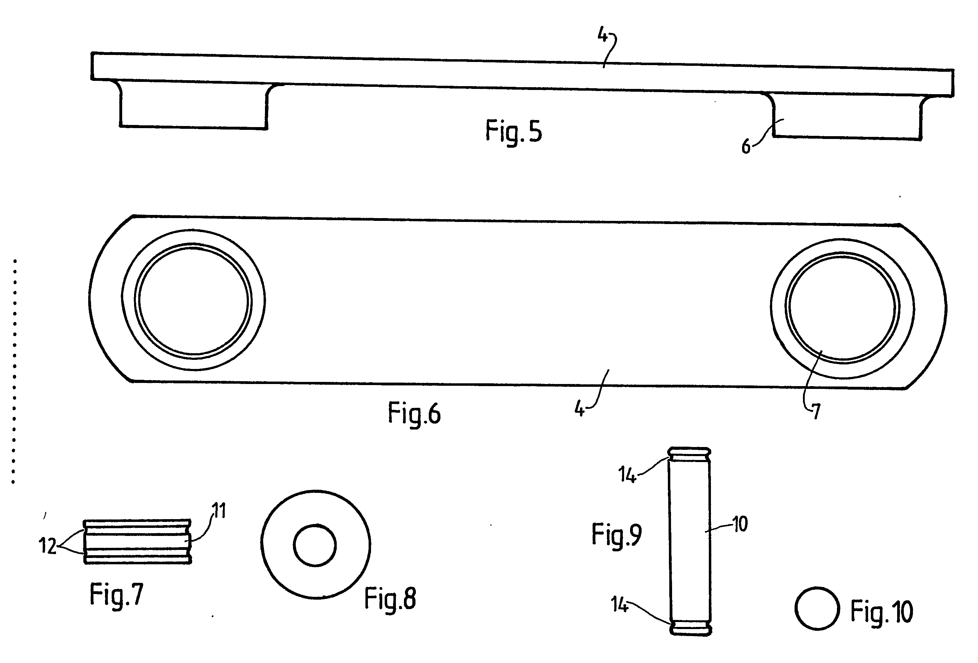

Referring now to Figure 2 the construction of a chain according to the present invention is shown. The chain is formed from alternating pairs of inner side bars 4 and outer side bars 5. Referring now to Figure 5, inner side bar 4 is seen to have barrel portions 6 secured thereto. In the preferred form of the present invention barrel portions 6 are integrally formed with inner side bars 4.

By having the barrel portions 6 secured to inner side bars 4 the transmission of force from a tooth of a gear wheel through the barrel portion to a side bar is much more direct than with conventional chain constructions.

Also the force transmitted to the barrel portion is transferred through the entire surface of the side bar adjacent the barrel portion rather than through a pin of small cross-section.

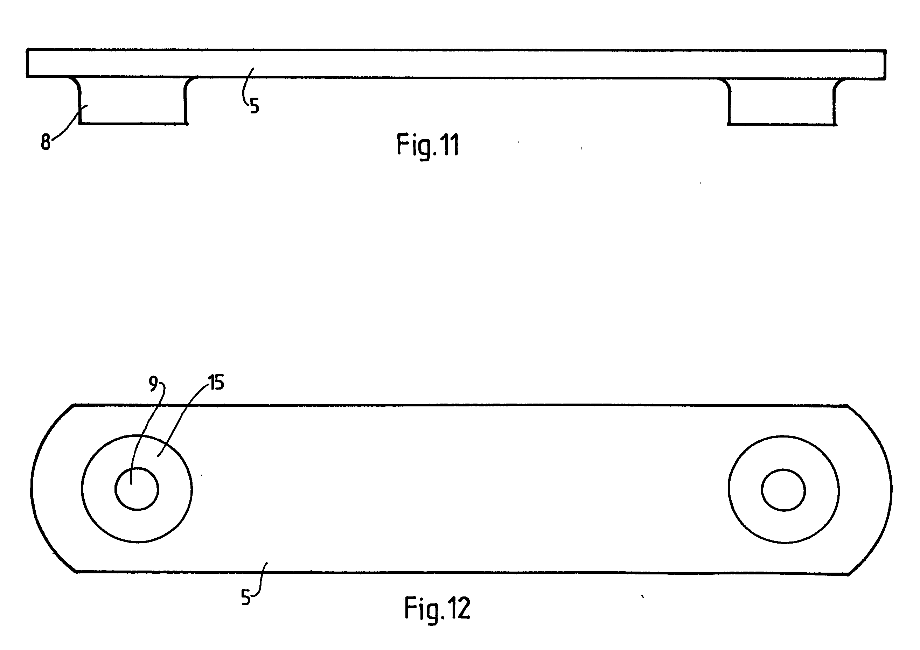

Inner side bars 4 are provided with apertures 7 therein. Outer side bars 5 (see Figure 11) are provided with studs 8 adapted to rotatably locate within bores 7 of inner side bars 4. When studs 8 are engaged with bores 7 of inner side bars 4 outer side bars 5 are freely rotatable with respect to inner side bars 4. The studs 8 are of substantially greater cross-section than the prior art pins through which force was transmitted. This ensures an even transfer of force without undue stress being placed on any particular region. Outer side bars 5 are provided with apertures 9 therein adapted to accommodate pins 10 therein.

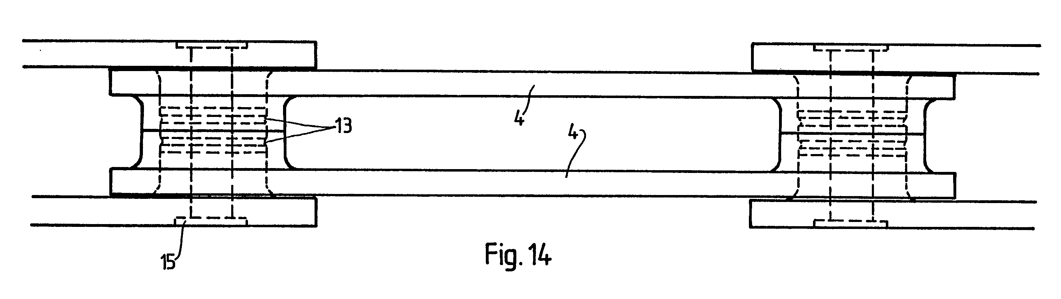

Shown in Figures 7 and 8 is bush 11 having circumferential grooves 12 adapted to engage with circumferential protrusions 13 of inner side bars 4 (see Figure 14). When assembled, inner side bars 4 are retained together by recesses 12 of bush 11 engaging with protrusions 13 of inner side bars 4. The bush 11 and adjacent inner side bars 4 may simply "snap lock" together.

Studs 8 of outer side bars 5 pass through apertures 7 of inner side bars 4. Pins 10 pass through apertures 9 of outer side bars 5 with the circumferentially grooved portions 14 of pin 10 being positioned within recess 15 of outer side bars 5. Suitable retaining rings (not shown) may be forced onto grooves 14 of pins 10 to retain the outer side bars 5 together. Pins 10 are intended merely to retain opposite outer side bars together and not to transfer force along the length of the chain.

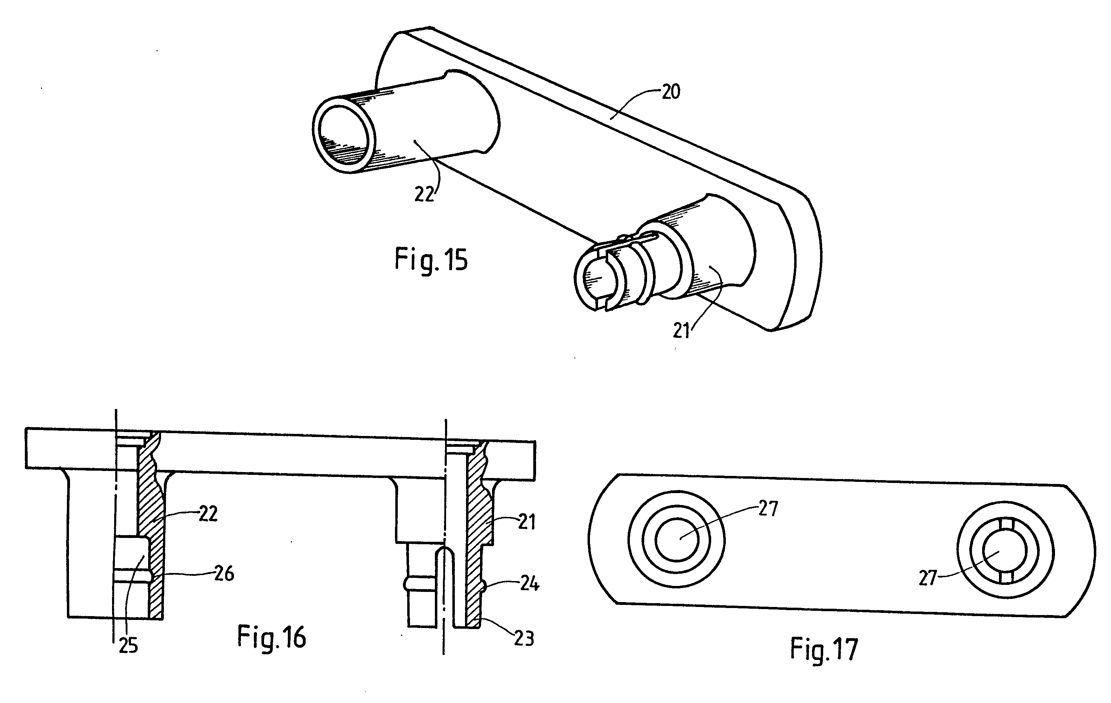

Referring now to Figures 15, 16 and 17 the preferred form of outer side bar is shown. Outer side bar 20 is provided with male stud 21 and female stud 22. Male stud 21 is provided with a male engaging portion 23 having a raised ridge 24 therearound. Female stud portion 22 is provided with a bore 25 therein adapted to accommodate male engaging portion 23. There is also provided a groove 26 to accommodate ridge 24 so that two of the outer side bars may snap lock together.

Thus, to assemble a length of chain the barrel portions of two pairs of inner side bars may be placed together and a pair of outer side bars snap locked together to retain the inner side bars in place. To ensure the side bars are firmly secured together pins may be secured through the apertures in the stud portions.

According to another embodiment the inner side bars may be provided with means to enable them to snap lock together. This embodiment may be used when attachments are to be connected to the chain.

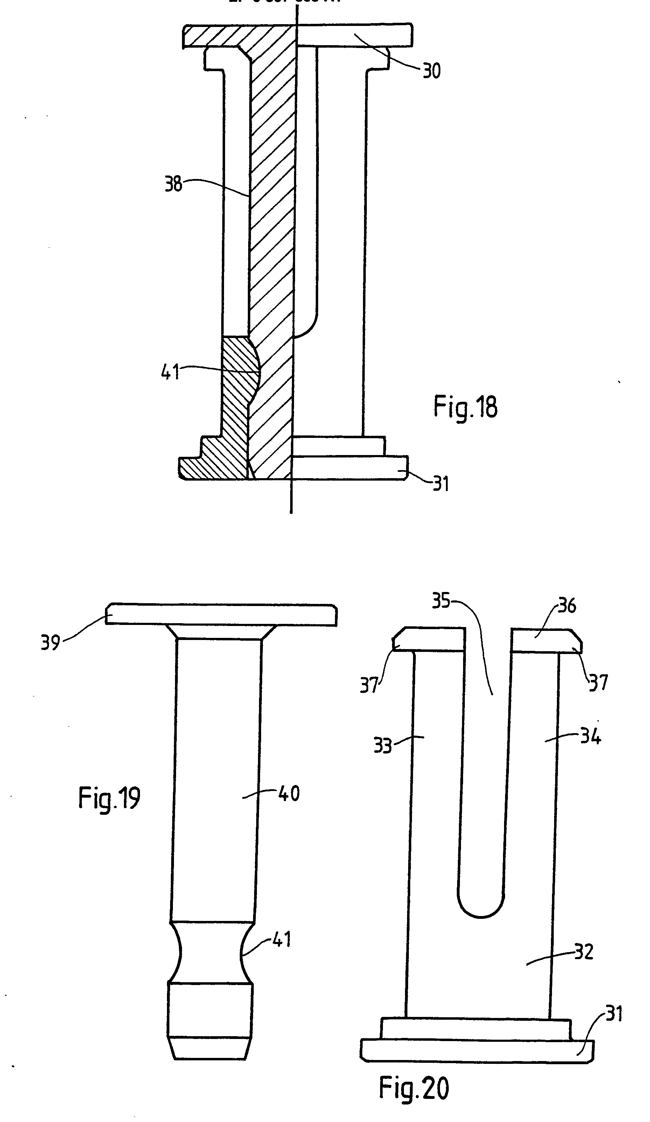

Referring now to Figures 18, 19 and 20 the preferred pin configuration is shown. The pin comprises a first pin portion 30 and a second pin portion 31. Second pin portion 31 has a body portion 32 which is of a similar diameter to apertures 27 of the outer side bar. Body 32 has a groove 35 therein defining legs 33 and 34.

As the diameter of end portion 36 is greater than the diameter of apertures 27 of the outer side bars, legs 33 and 34 are squeezed together when the second pin portion has passed through apertures 27 of the outer side bars. Once the second pin portion has been passed through apertures 27 of the outer side bars, legs 33 and 34 spring back to their normal position so that flanges 37 extend beyond apertures 27 and prevent the pin from being retracted. End portion 36 will preferably define a circle when legs 33 and 34 are forced together so that end portion 36 may pass through apertures 27 of the outer side bars.

The second pin portion may then be inserted into the bore 38 of the second pin portion. The first pin portion has a head 39 which abuts against the end portion 36 of the second pin portion. Body 40 of second pin portion 30 is seen to also be provided with a groove 41 therein which engagegs with ridge 41 of the second pin portion so that the two pin portions snap lock together. Once body portion 40 of the first pin portion 30 is located within aperture 38 of second pin portion 31 this prevents legs 33 and 34 of second pin portion 31 moving together and thus flanges 37 prevent retraction of the pin.

Once a pin in inserted in apertures 27 male portion 23 is prevented from releasing from female portion 22 as ridge 24 cannot compress inwardly to allow movement past groove 26.

The chain of the present invention is suitable for hollow pin or solid pin configuration. For hollow pin configuration accessories may easily be attached to the chain using apertures 9.

Any length of chain according to the present invention may be formed for the particular purpose required. The dimensions of the chain may vary depending upon particular applications as may the materials.

Inner side bars 4 are preferably all identical to one another. Likewise outer side bars 5 are preferably identical. This is advantageous for mass production as only one die is required for each link type. When formed of plastics the links may be suitably formed by injection moulding techniques. It is envisaged that the links may be formed of a composite plastics material consisting of about 40% fibreglass and about 60% PET. Other composite materials formed of plastics and carbon fibre, keylar or graphite may also be used. The preferred material for the side bars is 45% long glass fibre filled nylon 6/10 with 5% PTFE. The preferred pin material is acetal.

The chain construction according to the present invention ensures more direct and even transfer of force between barrel portions and adjacent side bars; thus providing a chain with increased strength having less "play" between sections.

Thus the present invention, at least in its preferred embodiments, provides a chain suitable for use in high load applications wherein force is transmitted along the side bars without placing substantial shear force between the pins and the side bars, or to at least provide the public with a useful choice. At least in its preferred embodiments, the present invention further provides a chain assembly suitable for use in high load corrosive or hygienic environments having a novel interlocking configuration suitable for use with plastics material.

Where in the aforegoing description reference has been made to specific components or integers of the invention having known equivalents then such equivalents are herein incorporated as if individually set forth.

Although this invention has been described by way of example and with reference to possible embodiments thereof it is to be appreciated that modifications or improvements may be made thereto without departing from the scope of the invention as defined the appended claims.

## Claims

1. A chain comprising alternating pairs of inner side bars (4) and outer side bars (5,20), said inner side bars (4) being provided at either end thereof with barrel portions (6) having bores (7) therethrough, said outer side bars (5,20) being provided with studs (8,21,22) at either end thereof adapted to rotatably engage with the bores (7) in the barrel portions (6) of the inner side bars (5,20) wherein the pairs of outer side bars (5,20) are secured together.

2. A chain as claimed in claim 1 wherein the barrel portions (6) are integrally formed with the inner side bars (4).

3. A chain as claimed in claim 1 or 2 wherein the studs (8,21,22) are formed integrally with the outer side bars (5,20).

4. A chain as claimed in claim 1, 2 or 3 wherein one end of each outer side bar (8,21,22) is provided with a stud (21) including a male portion (23) having a ridge (24) therearound and the other end is provided with a stud (22) including a famale portion (25) having a groove (26) therein adapted to engage with another male portion (23), wherein the male (23) and female (25) portions of outer side bar pairs may be snap locked together.

5. A chain as claimed in any one of the preceding claims having pins (10,30,31) located in apertures (9,27) in the studs (8,21,22) to hold the outer side bars (5,20) together.

6. A chain as claimed in claim 5 wherein the pins (10,30,31) have first pin portions (30) and second pin portions (31) which snap lock together.

7. A chain as claimed in claim 6 wherein the second pin portion (31) has two legs (33,34) with flanges (37) on the ends thereof wherein the legs (33,34) may be forced together to allow the second pin portion (31) to pass through apertures (9,27) in the outer side bars (5,20) and be retained in position by a first pin portion (30) which prevents closing of the legs (33,34).

8. A chain as claimed in any one of the preceding claims wherein the side bars (5,20) are formed of plastics material or composite materials including plastic and fibreglass or carbon fibre or kevlar.

9. A chain as claimed in claim 8 wherein the side bars (5,20) are formed of 45% long glass fibre filled nylon 6/10 and about 5% PTFE.

10. A chain as claimed in any one of claims 5 to 7 wherein the pins (10,30,31) are formed of acetal.

EP 0 397 503 A1

Fig.1

Fig. 2

Fig. 3

Fig.4

EP 0 397 503 A1

Fig.5

Fig.6

Fig.7

Fig.8

Fig.9

Fig.10

Fig.11

Fig.12

EP 0 397 503 A1

Fig.13

EP 0 397 503 A1

Fig. 14

Fig.15

Fig.16

Fig.17

EP 0 397 503 A1

EP 0 397 503 A1

Fig.18

38

41

30

31

Fig.19

39

40

41

Fig.20

35

36

37

37

33

34

32

31

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A- 968 423 (VAST)<br>* Whole document *<br>--- | 1,2,3,5 | F 16 G 13/06 |
| X | GB-A- 18 097 (HUGHES)(A.D. 1915)<br>* Page 1, lines 28-40; figure 1 *<br>--- | 1,2,3,5 | |
| X | GB-A- 981 618 (INITIAL PLASTICS)<br>* Page 2, lines 51-90; figures 3,4 *<br>--- | 1,2,3,4,8 | |
| D,A | US-A-4 355 502 (SHELDON)<br>* Column 3, lines 61-64; figures 2,3,6 *<br>--- | 4,5,8 | |
| A | US-A-3 231 069 (LANHAM)<br>* Column 3, lines 7-34 *<br>--- | 8,10 | |
| D,A | GB-A-2 003 248 (REXNORD)<br>* Page 3, lines 9-10 *<br>--- | 8,9 | |
| A | FR-A-2 172 136 (REXNORD)<br>* Page 3, line 30 - page 4, line 19 *<br>--- | 8,9 | TECHNICAL FIELDS SEARCHED (Int. Cl.5) |
| D,A | WO-A-8 501 783 (OY NOKIA)<br>* Page 2, lines 30-32 *<br>--- | 8,10 | F 16 G |
| P,A | DE-A-3 806 400 (IGUS)<br>* Column 2, lines 54-56 *<br>----- | 8,9 | |

The present search report has been drawn up for all claims

| Place of search | Date of completion of the search | Examiner |
|---|---|---|
| THE HAGUE | 08-08-1990 | BARON C. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)